# EUROPEAN PATENT SPECIFICATION

(11) **EP 1 957 183 B1**
(45) Date of publication and mention of the grant of the patent: **14.04.2010**
(21) Application number: 06830347.8
(22) Date of filing: 05.12.2006
(51) Int. Cl.: B01D 53/86, C10L 3/10

(54) **PROCESS FOR THE REMOVAL OF SULPHUR COMPOUNDS AND CARBON DIOXIDE FROM A GAS STREAM**
VERFAHREN ZUR ENTFERNUNG VON SCHWEFELVERBINDUNGEN UND KOHLENDIOXID AUS EINEM GASSTROM
PROCÉDÉ D'ÉLIMINATION DE COMPOSÉS SULFURÉS ET DE DIOXYDE DE CARBONE D'UN COURANT GAZEUX

(30) Priority: 07.12.2005 EP 05257513
(43) Date of publication of application: 20.08.2008
(73) Proprietor: Shell Internationale Research Maatschappij B.V., 2596 HR Den Haag (NL)
(72) Inventor: GROOTVELD, Gerard, NL-1031 CM Amsterdam (NL); VAN HEERINGEN, Gijsbert Jan, NL-1031 CM Amsterdam (NL)
(74) Representative: Matthezing, Robert Maarten
(86) International application number: PCT/EP2006/069297
(87) International publication number: WO 2007/065884

(56) References cited:
- EP-A- 0 140 191
- EP-A- 1 338 557
- WO-A-98/07502
- WO-A-2004/047955
- WO-A-2006/013206
- US-A- 4 430 317
- US-A- 5 607 657
- PATENT ABSTRACTS OF JAPAN vol. 1998, no. 01, 30 January 1998 (1998-01-30) & JP 09 255974 A (CHIYODA CORP), 30 September 1997 (1997-09-30)
- PATENT ABSTRACTS OF JAPAN vol. 1997, no. 03, 31 March 1997 (1997-03-31) & JP 08 290904 A (MITSUBISHI KAKOKI KAISHA LTD), 5 November 1996 (1996-11-05)

## Description

### Field of the invention

The present invention provides a process for the removal of sulphur compounds and carbon dioxide from a gas stream comprising at least 50% by volume of C₁-C₄ hydrocarbons and comprising sulphur compounds including hydrogen sulphide and mercaptans, in particular from natural gas, that will be used for conversion into synthesis gas. The invention further provides a method for the start-up of such process.

### Background of the invention

The removal of sulphur-containing compounds from gas streams comprising such compounds has always been of considerable importance in the past and is even more so today in view of continuously tightening environmental regulations. This holds for combustion gases as obtained in the combustion of organic compounds as coal, as well as for natural gas streams to be used for e.g. the preparation of synthesis gas and for residential use or to be transported as liquid natural gas.

Sulphur contaminants in natural gas streams include hydrogen sulphide and mercaptans. Mercaptans, due to their odorous nature, can be detected at parts per million concentration levels. Thus, it is desirable for users of natural gas to have concentrations of mercaptans lowered to e.g. less than 5, or even less than 2 ppmv, and total concentration of sulphur compounds to e.g. less than 30 or, preferably, less than 20 ppmv, e.g. 15 or 10 ppmv.

Numerous natural gas wells produce what is called "sour gas", i.e. natural gas containing hydrogen sulphide, often in combination with mercaptans, the total amount of sulphur compounds being present in concentrations that makes the natural gas unsuitable for direct use. Considerable effort has been spent to find effective and cost-efficient means to remove these undesired compounds. In addition, the natural gas may also contain varying amounts of carbon dioxide and carbonyl sulphide, which depending on the use of the natural gas often have to be removed at least partly.

A number of processes are known for the removal of sulphur compounds and optionally carbon dioxide and carbonyl sulphide from gas streams as natural gas. These processes are based on physical and/or chemical absorption, solid bed adsorption and/or chemical reaction. Physical and/or chemical absorption processes suffer from the fact that they frequently encounter difficulties in reaching the low concentration of the undesired sulphur compounds, unless (extremely) large reactors are used. Solid bed adsorption processes suffer from the fact that they are only able to adsorb limited amounts of undesired compounds, while regeneration is relatively cumbersome. Especially large solid beds take relatively large amounts of time for regeneration and disproportionately large amounts of regeneration gas is needed. Chemical processes in general are able to remove carbon dioxide and/or hydrogen sulphide without large difficulties, however, they suffer from the fact that they do not effectively remove mercaptans and often produce large amounts of waste.

Sulphur compounds, especially hydrogen sulphide in combination with mercaptans, and optionally in combination with carbon dioxide and carbonyl sulphide, may be removed from gas streams, especially natural gas streams, by a combined process known from WO2004/047955 in which in a first step, an absorption process removes at least part of the hydrogen sulphide and carbon dioxide (if present), whilst in a second solid adsorption step, mercaptans and other sulphur compounds are removed.

If the gas stream is to be used for a catalytic process such as for example steam methane reforming, further removal of sulphur compounds, in particular of mercaptans, thiophenes, carbonyl sulphide, and aromatic sulphur compounds such as thiophenol and dibenzothiophenes, than can be achieved by the method disclosed in WO2004/047955 might be desired.

### Summary of the invention

The present invention provides a process for improved removal of sulphur compounds from hydrocarbonaceous gas streams by using the process according to WO2004/047955 followed by a hydrogenation step and absorbing the hydrogen sulphide formed in the hydrogenation step in a guard bed.

Accordingly, the present invention provides a process for the removal of sulphur compounds and carbon dioxide from a hydrocarbonaceous gas stream comprising at least 50 %v of C₁-C₄ hydrocarbons and comprising sulphur compounds including hydrogen sulphide and mercaptans, the process comprising the steps of:
(a) washing the hydrocarbonaceous gas stream with an aqueous amine washing solution to remove hydrogen sulphide, any carbon dioxide, and part of the mercaptans to obtain a first purified gas stream;
(b) passing the first purified gas stream through one or more molecular sieves to further remove mercaptans to obtain a second purified gas stream;
(c) contacting the second purified gas stream and a hydrogen stream with a hydrogenation catalyst under hydrogenation conditions to obtain a third purified gas stream; and
(d) passing the third purified gas stream through one or more hydrogen sulphide guard beds to obtain purified gas.

With the process according to the present invention, sulphur compounds such as carbonyl sulphide, mercaptans, thiophenols and thiophenes that are typically not completely removed by steps (a) and (b), are hydrogenated to provide hydrogen sulphide, which can be wholly or substantially removed by the one or more hydrogen sulphide guard beds in step (d).

A further advantage of the process according to the invention is that it is suitable for dealing with any sudden, usually unexpected and possibly significant, changes in the level of sulphur compounds in a gas stream. Sudden 'spikes' of sulphur compounds can overwhelm existing methods and apparatuses, defeating their purpose. Such 'spikes' are also not uncommon due to the nature of some gas streams, in particular sour natural gas, whose sulphur levels can change dramatically.

The present invention is able to accommodate any level (volume, flow, etc) of sulphur compounds and any level of gas stream, simply by changing the involvement of hydrogenation step (c). An apparatus, system or plant using the present invention therefore has significantly more ability to deal with differing gas streams.

The process according to the present invention is particularly suitable for treating a gas stream that is to be fed to a catalytic process, since catalysts are often poisoned by very small amounts of sulphur compounds.

The process according to the invention may be advantageously applied in an integrated process wherein a hydrogen stream is being produced in one of the process units, for example an integrated process involving a catalytic process for synthesis gas production, i.e. a mixture comprising carbon monoxide and hydrogen, such as steam methane reforming, autothermal reforming or catalytic partial oxidation of hydrocarbons. The hydrogen produced by the catalytic process may then be used as hydrogen stream in the process according to the invention.

During start-up of such integrated process, there might not yet be sufficient hydrogen available for step (c) of the process according to the invention. It has now been found that the process according to the invention may be started by feeding steam to step (c). Accordingly, the invention further provides a method for the start-up of a process according to the invention, the method comprising, during a start-up period wherein no or insufficient hydrogen is produced by the conversion of the purified gas into synthesis gas, feeding steam to step (c).

### Brief description of the drawing

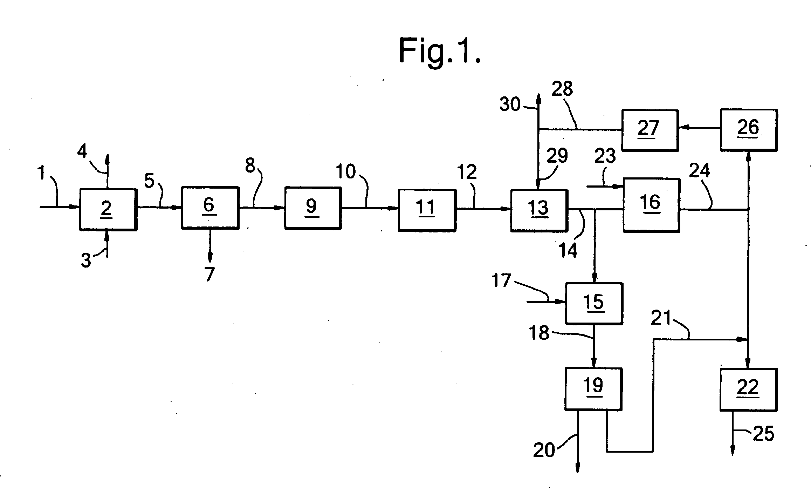

Figure 1 is showing a process for converting natural gas into hydrocarbons with the process for the removal of sulphur compounds and carbon dioxide from a gas stream according to the invention integrated therein.

### Detailed description of the invention

In step (a) of the process according to the invention, a hydrocarbonaceous gas stream comprising sulphur compounds including at least hydrogen sulphide and mercaptans, and
optionally comprising carbon dioxide, is washed with an aqueous amine washing solution to remove hydrogen sulphide, part of the mercaptans and, if present, also carbon dioxide and part of the carbonyl sulphide to obtain a first purified gas stream.

Aqueous amine washing steps for this purpose are known in the art, for example from W02004/047955. The aqueous amine washing solution preferably comprises 10 to 45 wt% based on total solution of water, 10 to 40 wt% based on total solution of a physical solvent and 20 to 60 wt% based on total solution of an amine.

Suitable physical solvents for this purpose are known in the art and include sulfolane, cyclo-tetramethylenesulfone and its derivatives, aliphatic acid amides, N-alkylated pyrrolidones and the corresponding piperidones, methanol, ethanol, mixtures of dialkylethers or polyethylene glycols, or mixtures thereof.

The amine may be a primary, secondary or tertiary amine, preferably a secondary or tertiary amine, even more preferably a secondary or tertiary amine compound derived from ethanol- or propanolamine, especially di-isopropanolamine, diethanolamine, monomethylethanolamine, methyldiethanolamine, or diethyl-monoethanolamine. Di-isopropanolamine or methyldiethanolamine are particularly preferred.

Step (a) is suitably performed at a temperature of at least 20 °C, preferably between 25 and 90 °C, more preferably between 30 and 55 °C. The pressure is typically in the range of from 15 to 90 bar (absolute), preferably of from 20 to 90 bar (absolute).

In step (a), typically in the range of from 90 to 100 wt% of the hydrogen sulphide present in the feed gas stream is removed, preferably in the range of from 95 to 100 wt%. Typically, in the range of from 70 to 90 wt% of the mercaptans present in the feed gas stream will be removed in step (a).

The first purified gas stream will typically comprise less than 10 ppmv, preferably less that 5 ppmv hydrogen sulphide, and typically in the range of from 5 to 60 ppmv mercaptans.

Preferably, the first purified gas stream obtained in step (a) is first cooled to a temperature between 5 and 45 °C, more preferably between 10 and 35 °C, where after any condensate is separated from the first purified gas stream, prior to step (b).

In step (b) of the process according to the invention, mercaptans are further removed from the first purified gas stream by means of molecular sieves. Water, if present, may also be removed in step (b), preferably by a separate molecular sieve that is located upstream of one of more molecular sieves for mercaptan removal. Such a water-removal molecular sieve preferably has an average pore diameter between 3 and 4 Å.

Molecular sieves suitable for mercaptan removal are known in the art, for example from W02004/047955. Preferably, crystalline molecular sieves are used. Preferably, the molecular sieves for mercaptan removal have an average pore diameter of 5 Å or more. In a preferred embodiment at least two molecular sieve beds are used containing wide pore diameter molecular sieves, preferably one bed containing 5 Å molecular sieves, the other bed containing molecular sieves of a larger pore diameter, preferably about 7.4 Å (such as for example a 13X molecular sieve). The molecular sieve having the pore diameter of 5 Å is particularly suitable for removing hydrogen sulphide (if present), methyl mercaptan and some ethyl mercaptan, while the second bed can remove the remainder of the ethyl mercaptan and the higher mercaptans.

Typically, the amount of mercaptans removed by step (a) is between 60 and 96 wt% (of total removed mercaptans in steps (a) and (b)), and the amount which is removed by step (b) is between 40 and 4 wt% (of total removed mercaptans in steps (a) and (b)).

Step (b) is suitably carried out at ambient temperature and a pressure in the range of from 15 to 90 bar (absolute).

After step (b), a second purified gas stream is obtained. Typically this stream will still contain small amounts of mercaptans and optionally carbonyl sulphide and other sulphur compounds, e.g. thiophenols and thiophenes.

In step (c) of the process according to the invention, the second purified gas stream and a hydrogen stream are contacted with a hydrogenation catalyst under hydrogenation conditions to obtain a third purified gas stream.

In hydrogenation step (c), remaining mercaptans and, if present carbonyl sulphide and optionally other sulphur compounds such as thiophenes and thiophenols are hydrogenated according to the following reactions:

RSH + H₂ → RH + H₂S

COS + H₂ → CO + H₂S

The temperature during hydrogenation in the hydrogenation unit will generally be in the range of from 200 to 450 °C, preferably of from 300 to 400 °C, more preferably of from 320 to 380 °C.

The pressure during hydrogenation will generally be in the range of from 5 to 100 bar (absolute), preferably of from 40 to 80 bar (absolute), more preferably of from 60 to 70 bar (absolute).

The hydrogenation catalyst may be any hydrogenation catalyst known in the art, and may include copper/zinc oxide, nickel, copper, nickel/tungsten, cobalt/molybdenum (CoMo) or nickel/molybdenum (NiMo).

The second purified gas stream and hydrogen stream can be mixed or admixed in any suitable way or system, and prior to or during their contacting the hydrogenation catalyst.

In step (d) of the process according to the invention, the third purified gas stream from hydrogenation step (c) is passed through one or more hydrogen sulphide guard beds in order to absorb the hydrogen sulphide produced in step (c) and purified gas is obtained.

The or each hydrogen sulphide guard bed includes one or more hydrogen sulphide adsorbents. Such adsorbents are well known in the art. Such adsorbents include zinc oxide and iron oxide, especially zinc oxide, and the or each oxide adsorbent may be promoted by one or more metals such as copper and nickel. Where two or more guard beds are used in the present invention, the or each guard bed may include one or more different adsorbents, and the or each guard bed may include the same or different adsorbent(s) from other guard bed(s).

Preferably, at least one hydrogen sulphide guard bed includes zinc oxide. This absorbs hydrogen sulphide to provide zinc sulphide in a reaction known in the art:

H₂S + ZnO → ZnS + H₂O

The zinc oxide based guard bed is preferably promoted by copper.

The or each hydrogen sulphide guard bed may optionally also contain alumina and/or active carbon.

The hydrogen stream used in hydrogenation step (c) may be provided by any suitable source. Whilst one source is pure hydrogen, any source providing sufficient hydrogen to effect the invention is usable, for example synthesis gas.

The gas stream to be purified in the process of the present invention is a hydrocarbonaceous gas stream comprising at least 50% by volume of C₁-C₄ hydrocarbons, more preferably at least 90% by volume, even more preferably natural gas, associated gas or coalbed methane. Natural gas is a general term that is applied to mixtures of light hydrocarbons and optionally inert gases (nitrogen, carbon dioxide, helium) derived from natural gas wells. The main component of natural gas is methane. Further, often ethane, propane and butane are present. In some cases (small) amounts of higher hydrocarbons may be present, often indicated as natural gas liquids or condensates. When produced together with oil, the natural gas is usually called associated gas. Sulphur compounds such as hydrogen sulphide, mercaptans, disulphides, thiophenes, thiophenols and carbonyl sulphide may be present in natural gas in varying amounts.

The feed gas stream for the process of the present invention may contain low as well as high amounts of sulphur compounds and carbon dioxide. Suitably the total feed gas stream comprises 0.05 to 20 vol% hydrogen sulphide, 1 to 1500 ppmv mercaptans and 0.25 to 40 vol% carbon dioxide, preferably 0.1 to 15 vol% hydrogen sulphide, 20 to 1000 ppmv mercaptans and 0.5 to 20 vol% carbon dioxide.

The process of the present invention is able to provide purified gas having a level of concentration of hydrogen sulphide and mercaptans both lower than 50 ppbv, especially lower than 20 ppbv, more especially lower than 5 ppbv.

If the gas stream is a hydrocarbonaceous gas stream comprising at least 50% by volume of C₁-C₄ hydrocarbons, in particular natural gas, the process preferably further comprises converting the purified gas into synthesis gas. The purified gas may be converted into synthesis gas by any process known in the art, for example by non-catalytic partial oxidation. Such process is for example disclosed in Oil and Gas Journal, September 6, 1971, pp 86-90. Preferably, the purified gas is converted into synthesis gas by a catalytic conversion process, such as for example steam methane reforming, autothermal reforming or catalytic partial oxidation, more preferably steam methane reforming. Such processes are well-known in the art. It is known that many of the generally used catalysts in synthesis gas preparation and water-gas shift conversion processes are very susceptible to sulphur poisoning, such that any reduction in the level of sulphur in the feed gas for such processes benefits such processes.

Preferably, the hydrogen stream to be used in step (c) is obtained from synthesis gas that is prepared by converting the purified gas. More preferably, from synthesis gas prepared from the purified gas by a catalytic process, such as steam methane reforming, autothermal reforming or catalytic partial oxidation.

Preferably, the hydrogen stream is obtained by first subjecting at least part of the synthesis gas to water-gas shift conversion and then optionally purifying the shifted synthesis gas by pressure swing adsorption (PSA).

An important advantage of using the purified gas for conversion into synthesis gas is that in that case sufficiently high quality hydrogen is readily available to provide the required hydrogen stream for step (c).

The synthesis gas obtained by converting the purified gas is preferably further catalytically converted into hydrocarbons by a Fischer-Tropsch process. Such process is well-known in the art.

The purified gas provided by the process of the present invention could also be used in any other suitable part, unit or apparatus, either integral or associated with a Fischer-Tropsch process, such as providing energy and/or power to one or more parts of the process.

If the hydrogen stream is provided by synthesis that is prepared from the purified gas, insufficient hydrogen for the hydrogen stream for step (c) may be available at times, for example during initial start up of the steam methane reformer or other synthesis gas preparation unit that is converting the purified gas. Where insufficient hydrogen is available, steam, preferably high pressure steam, could be fed to step (c) to at least provide some sulphur compound removal activity in step (c), for example the hydrolysis of carbonyl sulphide to hydrogen sulphide. As hydrogen becomes available from the synthesis gas produced in the steam methane reformer or other synthesis gas preparation unit, it could replace the steam. Preferably, the steam is gradually replaced by hydrogen obtained from the synthesis gas as synthesis gas is produced from the purified gas.

### Detailed description of the drawing

In Figure 1 is shown a process for the synthesis of hydrocarbons from natural gas comprising the process for the removal of sulphur compounds and carbon dioxide from a gas stream according to the invention.

A stream of sour natural gas 1 is supplied to solvent washing unit 2. In solvent washing unit 2 the sour natural gas is washed with an aqueous amine washing solution (supplied via line 3) to remove hydrogen sulphide, carbon dioxide and part of the mercaptans and carbonyl sulphide. The spent solvent is discharged from unit 2 via line 4 and regenerated (not shown). A first purified gas stream is discharged via line 5 and cooled in condenser 6 and condensed water and liquid hydrocarbons are discharged via line 7. The dewatered first purified gas stream is supplied via line 8 to molecular sieve unit 9. Unit 9 preferably comprises at least two parallel beds of molecular sieves. Each bed preferably comprising molecular sieves with different pore diameters in series. At least one of the parallel beds operates in adsorption mode while the others may be regenerated. A second purified gas stream 10 is fed to catalytic hydrogenation unit 11. A third purified gas stream that comprises hydrogen sulphide formed in hydrogenation unit 11 is supplied via line 12 to hydrogen sulphide guard bed unit 13. Preferably two or more hydrogen sulphide guard beds are used in unit 13 which operate in a lead/lag arrangement. Purified gas 14 is discharged from unit 13 and the greater part of it is supplied to gasifier 15 and the remainder to steam methane reformer 16. Oxygen is supplied to gasifier 15 via line 17 and the purified gas is partially oxidised to obtain synthesis gas, typically with a hydrogen-to-carbon monoxide ratio in the range of from 1.5 to 2.0. The synthesis gas is fed via line 18 to a first Fischer-Tropsch hydrocarbon synthesis reactor 19 and is converted into hydrocarbons. Instead of gasifier 15, an autothermal reformer may be used for conversion of the purified gas into synthesis gas.

In reactor 19, liquid hydrocarbon product 20 is formed. A gaseous effluent 21 comprising C₁-C₄ hydrocarbons and unconverted synthesis gas with a relatively low hydrogen-to-carbon monoxide ratio (typically below 0.5) is supplied to a second Fischer-Tropsch hydrocarbon synthesis reactor 22.

Steam 23 is supplied to steam methane reformer 16 and the purified gas is converted into synthesis gas 24 with a high hydrogen-to-carbon monoxide ratio, i.e. around 5. Part of the synthesis gas 24 formed in steam methane reformer 16 is combined with the gaseous effluent 21 of Fischer-Tropsch hydrocarbon synthesis reactor 19 and the combined stream is supplied to second Fischer-Tropsch hydrocarbon synthesis reactor 22 to produce further liquid hydrocarbon product 25.

The remainder of the synthesis gas 24 formed in steam methane reformer 16 is further enriched in hydrogen in water-gas shift unit 26 and then further enrichment in hydrogen in pressure swing absorber 27. A hydrogen stream 28 is thus produced. Part 29 of hydrogen stream 28 is fed to hydrogenation unit 11 and part 30 is used for other purposes. Typically, only a small fraction, typically below 2% of the hydrogen produced in steam methane reformer 16 is used in hydrogenation unit 11. The rest is supplied to second Fischer Tropsch reactor 22, and optionally also to first Fischer Tropsch reactor 19, or used in other parts of the hydrocarbon synthesis process or in other processes.

### Example

A typical natural gas stream that has been subjected to steps (a) and (b) of the process according to the invention may have some carbonyl sulphide, and a typical mercaptans concentration between about 100 and 500 ppbv. Such a gas stream (the second purified gas stream) was fed into a hydrogenation unit or reactor having a catalyst volume of about 25-30 m³. The molecular mass of the natural gas ranged from about 18-20 g/mol, and the hydrogen/natural gas ratio ranged from about 0.1-0.5 ton H₂ per 100 tonne of natural gas. This created a typical gas hourly space velocity range from about 3500-6000 Nm³/m³/hr.

Under such conditions, and using a cobalt-based hydrogenation catalyst, the carbonyl sulphide and mercaptans were converted to hydrogen sulphide. The hydrogenation unit preferably has an operation temperature which is above 250 °C, more preferably above 300 °C. The hydrogenation unit also preferably has an operating pressure above atmospheric pressure, and more preferably above 40-50 bar (absolute).

The outflow from the hydrogenation unit was passed to two hydrogen sulphide absorption guard beds in series. The H₂S concentration in the inlet of the first guard bed ranged from a minimum to 15-20 ppmv. As always, the concentration of H₂S depends upon the amount of sulphur compounds in the gas stream fed to the hydrogenation unit. The adsorption beds were filled with zinc oxide. The operating pressure and temperature of the sulphide guard beds were similar to the pressure and temperature used in the hydrogenation unit.

The gas hourly space velocity in the guard beds was usually lower than that in the hydrogenation unit, and was in the range 2000-3000 Nm³/m³/hr.

The amount of sulphur or sulphur compounds in the gas stream after the guard beds was less than 5 ppbv.

## Claims

1. A process for the removal of sulphur compounds and carbon dioxide from a hydrocarbonaceous gas stream comprising at least 50 %v of C₁-C₄ hydrocarbons and comprising sulphur compounds including hydrogen sulphide and mercaptans, the process comprising the steps of:
(a) washing the hydrocarbonaceous gas stream with an aqueous amine washing solution to remove hydrogen sulphide, any carbon dioxide, and part of the mercaptans to obtain a first purified gas stream;
(b) passing the first purified gas stream through one or more molecular sieves to further remove mercaptans to obtain a second purified gas stream;
(c) contacting the second purified gas stream and a hydrogen stream with a hydrogenation catalyst under hydrogenation conditions to obtain a third purified gas stream; and
(d) passing the third purified gas stream through one or more hydrogen sulphide guard beds to obtain purified gas.

2. A process as claimed in claim 1, wherein in step (b) a crystalline molecular sieve is used, preferably a crystalline molecular sieve having an average pore diameter of 5 Å or more.

3. A process as claimed in claim 1 or 2, wherein the hydrogenation conditions in step (c) comprise a temperature in the range of from 200 to 450 °C, preferably of from 300 to 400 °C, more preferably of from 320 to 380 °C.

4. A process as claimed in any one of the preceding claims, wherein the hydrogenation conditions in step (c) comprise a pressure in the range of from 5 to 100 bar, preferably of from 40 to 80 bar, more preferably of from 60 to 70 bar.

5. A process as claimed in any one of the preceding claims, wherein the one or more hydrogen sulphide guard beds in step (d) include one or more hydrogen sulphide adsorbents.

6. A process as claimed in claim 5, wherein the one or more adsorbents are selected from the group comprising zinc oxide and iron oxide, preferably promoted by one or more metals, more preferably promoted by nickel or copper.

7. A process as claimed in any one of the preceding claims, wherein the hydrocarbonaceous gas stream comprises at least 90 %v of C₁-C₄ hydrocarbons, preferably is natural gas, associated gas or coalbed methane.

8. A process as claimed in any one of the preceding claims, further comprising converting the purified gas into synthesis gas.

9. A process as claimed in claim 8, wherein the purified gas is converted in synthesis gas by a steam methane reforming process, an autothermal reforming process or a catalytic partial oxidation process, preferably a steam methane reforming process.

10. A process as claimed in claim 8 or claim 9, wherein the hydrogen stream is hydrogen obtained from the synthesis gas, preferably obtained by water-gas shift conversion of part of the synthesis gas, more preferably after purification of the water-gas shifted synthesis gas by pressure swing adsorption

11. A process according to any one of claims 8 to 10, further comprising catalytically converting at least part of the synthesis gas into hydrocarbons by a Fischer-Tropsch process.

12. A method for the start-up of a process according to claim 10 or 11, the method comprising, during a start-up period wherein no or insufficient hydrogen is produced by the conversion of the purified gas into synthesis gas, feeding steam to step (c).

13. A method according to claim 12, wherein as synthesis gas is produced from the purified gas, the steam is gradually replaced by hydrogen obtained from the synthesis gas.

## Patentansprüche

1. Verfahren zur Entfernung von Schwefelverbindungen und Kohlendioxid aus einem kohlenwasserstoffhältigen Gasstrom, umfassend wenigstens 50 Vol.-% C₁-C₄-Kohlenwasserstoffe und umfassend Schwefelverbindungen einschließlich Schwefelwasserstoff und Mercaptanen, wobei das Verfahren die Schritte von:
(a) Waschen des kohlenwasserstoffhältigen Gasstroms mit einer wässrigen Aminwaschlösung zur Entfernung von Schwefelwasserstoff, jedwedem Kohlendioxid und einem Teil der Mercaptane, um einen ersten gereinigten Gasstrom zu erhalten;
(b) Leiten des ersten gereinigten Gasstroms durch eines oder mehrere Molekularsiebe, um weiter Mercaptane zu entfernen, um einen zweiten gereinigten Gasstrom zu erhalten;
(c) In-Kontakt-Bringen des zweiten gereinigten Gasstroms und eines Wasserstoffstroms mit einem Hydrierungskatalysator unter Hydrierungsbedingungen, um einen dritten gereinigten Gasstrom zu erhalten; und
(d) Leiten des dritten gereinigten Gasstroms durch eines oder mehrere Schwefelwasserstoff-Schutzbetten, um gereinigtes Gas zu erhalten;
umfasst.

2. Verfahren nach Anspruch 1, wobei im Schritt (b) ein kristallines Molekularsieb verwendet wird, vorzugsweise ein kristallines Molekularsieb mit einem mittleren Porendurchmesser von 5 Å oder darüber.

3. Verfahren nach Anspruch 1 oder 2, wobei die Hydrierungsbedingungen im Schritt (c) eine Temperatur im Bereich von 200 bis 450 °C, vorzugsweise von 300 bis 400 °C, stärker bevorzugt von 320 bis 380 °C umfassen.

4. Verfahren nach einem der vorstehenden Ansprüche, wobei die Hydrierungsbedingungen im Schritt (c) einen Druck im Bereich von 5 bis 100 bar, vorzugsweise von 40 bis 80 bar, stärker bevorzugt von 60 bis 70 bar umfassen.

5. Verfahren nach einem der vorstehenden Ansprüche, wobei das eine oder die mehreren Schwefelwasserstoff-Schutzbetten im Schritt (d) ein oder mehrere Schwefelwasserstoff-Adsorbierungsmittel umfassen.

6. Verfahren nach Anspruch 5, wobei das eine oder die mehreren Adsorbierungsmittel von der Gruppe, umfassend Zinkoxid und Eisenoxid, vorzugsweise dotiert mit einem oder mehreren Metallen, stärker bevorzugt dotiert mit Nickel oder Kupfer, ausgewählt ist/sind.

7. Verfahren nach einem der vorstehenden Ansprüche, wobei der kohlenwasserstoffhältige Gasstrom wenigstens 90 Vol.-% C₁-C₄-Kohlenwasserstoffe umfasst, vorzugsweise Erdgas, Begleitgas oder Kohlenbettmethan ist.

8. Verfahren nach einem der vorstehenden Ansprüche, ferner umfassend das Umwandeln des gereinigten Gases in Synthesegas.

9. Verfahren nach Anspruch 8, wobei das gereinigte Gas in Synthesegas umgewandelt wird durch ein Dampf-Methan-Reformierungsverfahren, ein autothermisches Reformierungsverfahren oder ein katalytisches Partial-OxidationsVerfahren, vorzugsweise ein Dampf-Methan-Reformierungsverfahren.

10. Verfahren nach Anspruch 8 oder Anspruch 9, wobei der Wasserstoffstrom Wasserstoff ist, welcher aus dem Synthesegas erhalten wird, vorzugsweise durch eine Wassergas-Shift-Umwandlung von einem Teil des Synthesegases, stärker bevorzugt nach Reinigung des Wassergas-Shift-Synthesegases durch Druckwechseladsorption.

11. Verfahren nach einem der Ansprüche 8 bis 10, ferner umfassend das katalytische Umwandeln von wenigstens einem Teil des Synthesegases in Kohlenwasserstoff durch ein Fischer-Tropsch-Verfahren.

12. Methode zum Ingangsetzen eines Verfahrens nach Anspruch 10 oder 11, wobei die Methode während der Ingangsetzungsdauer, bei welcher kein oder unzureichend Wasserstoff durch die Umwandlung des gereinigten Gases in Synthesegas produziert wird, Dampf in den Schritt (c) zugeführt wird.

13. Methode nach Anspruch 12, wobei bei der Synthesegasproduktion aus dem gereinigten Gas der Dampf allmählich durch Wasserstoff ersetzt wird, welcher aus dem Synthesegas erhalten wird.

## Revendications

1. Procédé d'élimination de composés sulfurés et de dioxyde de carbone d'un courant gazeux à base d'hydrocarbures comprenant au moins 50 % en volume d'hydrocarbures en C₁-C₄ et comprenant des composés sulfurés comprenant du sulfure d'hydrogène et des mercaptans, le procédé comprenant les étapes consistant à :
(a) laver le courant gazeux à base d'hydrocarbures avec une solution lavante aminée aqueuse pour éliminer le sulfure d'hydrogène, le dioxyde de carbone et une partie des mercaptans afin d'obtenir un premier courant gazeux purifié ;
(b) faire passer le premier courant gazeux purifié à travers un ou plusieurs tamis moléculaires pour éliminer davantage de mercaptans afin d'obtenir un deuxième courant gazeux purifié ;
(c) mettre en contact le deuxième courant gazeux purifié et un courant d'hydrogène avec un catalyseur d'hydrogénation dans des conditions d'hydrogénation afin d'obtenir un troisième courant gazeux purifié ; et
(d) faire passer le troisième courant gazeux purifié à travers un ou plusieurs lits de garde adsorbant le sulfure d'hydrogène afin d'obtenir un gaz purifié.

2. Procédé selon la revendication 1, dans lequel, à l'étape (b), on utilise un tamis moléculaire cristallin, de préférence un tamis moléculaire cristallin ayant un diamètre de pores moyen de 5 Å ou plus.

3. Procédé selon la revendication 1 ou 2, dans lequel les conditions d'hydrogénation à l'étape (c) comprennent une température située dans une fourchette allant de 200 à 450 °C, de préférence de 300 à 400 °C, de manière davantage préférée de 320 à 380 °C.

4. Procédé selon l'une quelconque des revendications précédentes, dans lequel les conditions d'hydrogénation à l'étape (c) comprennent une pression située dans une plage allant de 5 à 100 bar, de préférence de 40 à 80 bar, de manière davantage préférée, de 60 à 70 bar.

5. Procédé selon l'une quelconque des revendications précédentes, dans lequel le ou les lits de garde adsorbant le sulfure d'hydrogène à l'étape (d) comprennent un ou plusieurs adsorbants du sulfure d'hydrogène.

6. Procédé selon la revendication 5, dans lequel le ou les adsorbants sont choisis dans le groupe comprenant l'oxyde de zinc et l'oxyde de fer, de préférence activés par un ou plusieurs métaux, de manière davantage préférée activés par le nickel ou le cuivre.

7. Procédé selon l'une quelconque des revendications précédentes, dans lequel le courant gazeux à base d'hydrocarbures comprend au moins 90 % en volume d'hydrocarbures en C₁-C₄, est de préférence du gaz naturel, un gaz associé ou du gaz de charbon.

8. Procédé selon l'une quelconque des revendications précédentes, comprenant en outre la transformation du gaz purifié en gaz de synthèse.

9. Procédé selon la revendication 8, dans lequel le gaz purifié est transformé en gaz de synthèse par un procédé de reformage du méthane à la vapeur, par un procédé de reformage autotherme ou par un procédé d'oxydation catalytique partielle, de préférence par un procédé de reformage du méthane à la vapeur.

10. Procédé selon la revendication 8 ou la revendication 9, dans lequel le courant d'hydrogène est de l'hydrogène obtenu à partir du gaz de synthèse, de préférence obtenu par réaction Water-Gas-Shift (réaction du gaz à l'eau) d'une partie du gaz de synthèse, de manière davantage préférée après purification du gaz de synthèse après réaction Water-Gas-Shift par adsorption par variations de pression.

11. Procédé selon l'une quelconque des revendications 8 à 10, comprenant en outre la transformation catalytique d'au moins une partie du gaz de synthèse en hydrocarbures par procédé Fischer-Tropsch.

12. Procédé pour démarrer un procédé selon la revendication 10 ou 11, le procédé comprenant une alimentation en vapeur à l'étape (c) au cours d'une période de démarrage pendant laquelle de l'hydrogène est produit en quantité insuffisante ou nulle par transformation du gaz purifié en gaz de synthèse.

13. Procédé selon la revendication 12, dans lequel, puisque le gaz de synthèse est produit à partir du gaz purifié, la vapeur est progressivement remplacée par l'hydrogène obtenu à partir du gaz de synthèse.
